(19) Europäisches Patentamt
European Patent Office
Office européen des brevets

(11) **EP 4 697 398 A1**

(12) **EUROPEAN PATENT APPLICATION**

(43) Date of publication:
**18.02.2026 Bulletin 2026/08**

(51) International Patent Classification (IPC):
$H01M\ 4/13^{(2010.01)}$ $H01M\ 4/62^{(2006.01)}$

(21) Application number: **25192074.0**

(22) Date of filing: **28.07.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.08.2024 JP 2024126112**

(71) Applicant: **Canon Kabushiki Kaisha**
**Tokyo, 146-8501 (JP)**

(72) Inventors:
• **NAKAZAWA, Ikuo**
**Tokyo (JP)**
• **TANIUCHI, Hiroshi**
**Tokyo (JP)**

• **USAMI, Hirokazu**
**Tokyo (JP)**
• **KUBO, Kenta**
**Tokyo (JP)**
• **MASADA, Yohei**
**Tokyo (JP)**
• **AOTANI, Takaharu**
**Tokyo (JP)**
• **AOKI, Kenji**
**Tokyo (JP)**
• **ARAKAWA, Mitsuyoshi**
**Tokyo (JP)**

(74) Representative: **WESER & Kollegen**
**Patentanwälte PartmbB**
**Radeckestraße 43**
**81245 München (DE)**

(54) **BATTERY BASE MATERIAL FOR SECONDARY BATTERY AND METHOD FOR MANUFACTURING SAME**

(57) A battery base material for use in a secondary battery, comprising a first base material (20), and a particle layer (40) arranged on one surface of the first base material (20), comprising particle of at least one of an active material and a solid electrolyte, wherein the particle layer (40) has a resin-comprising coating film, which is a second base material, the coating film forms an undulating structure having at least either protrusion or depression on a surface of the particle layer (40); and in a region where the undulating structure is formed, a total number density of the protrusion and the depression measured using a confocal laser microscope is $1/cm^2$ or more and $40,000/cm^2$ or less.

FIG.2A

FIG.2B

FIG.2C

FIG.2D

FIG.2E

FIG.2F

FIG.2G

FIG.2H

FIG.2I

## Description

TECHNICAL FIELD

The present disclosure relates to a battery base material for use in a secondary battery and a method for manufacturing the same.

BACKGROUND

In recent years, various new manufacturing methods using additive manufacturing have been developed, but the technology of designing and arranging multiple material particles to create a functional structure is difficult, and there are challenges in implementing such technology at a high level. For example, the technology of arranging toner particle using electrophotography is widely used. However, toner comprises particle made of a composite material that already comprises a binder in an amount several times that of a pigment as a functional material in order to obtain charging characteristics. Furthermore, due to the electrostatic characteristics, it is difficult, in principle, implement positioning with a single particle, i.e., a phenomenon that is also exhibited in electrostatic screen printing, in which particles can be patterned without a binder.

If functional particle can be arranged in the right place in a freely selected pattern, it is possible to avoid using unnecessary particle, and a greater effect can be elicited, for example, with expensive materials such as battery materials.

Japanese Patent Laid-Open No. 2019-137060 discloses a technique by which in the manufacture of a solid-state battery, particle arranged on a resin base material are laminated in a plurality of layers together with the resin base material so as to obtain a laminate, thereby manufacturing a solid-state battery with a larger capacity.

SUMMARY

In the laminate manufactured by the method disclosed in Japanese Patent Laid-Open No. 2019-137060, the resin base material contributes little to the characteristics of the solid-state battery and is therefore removed during the manufacturing process. For this reason, it is desirable that the proportion of the resin base material in the total volume of the laminate be small. However, since the resin base material also plays the role of a support for the particles, it may be difficult to reduce the thickness of the resin base material by at least a certain level.

In addition, in recent years, as the secondary batteries have become more widespread, they are required to be high-performance and large-sized. All-solid-state batteries and battery base materials also need to meet the same requirements, but where the area of the battery base material is increased, an uneven shape occurs more easily. Furthermore, when handling material layers, such as performing transfer lamination in the manufacturing process of the battery base material, it is easy to induce transfer defects. Therefore, controlling the shape of the material layer is important.

The present disclosure provides a battery base material that can reduce the proportion of a resin base material in the total volume of the laminate, and a manufacturing method thereof. In particular, the disclosure relates to controlling the shape of the material layer when the area of the material layer is enlarged.

At least one aspect of the present disclosure provides a battery base material in which the base material comprising a resin can be easily removed in the manufacturing process, and which has excellent transferability of the particle layer even when the area is enlarged. In addition, at least one aspect of the present disclosure provides a manufacturing method for the battery base material.

The present disclosure in its first aspect provides a battery base material as specified in claim 1. Optional features are specified in claims 2 to 6.

The present disclosure in its second aspect provides a method for manufacturing a battery base material as specified in claim 7. Optional features are specified in claims 8 and 9.

Features of the present disclosure will become apparent from the following description of embodiments with reference to the attached drawings. The following description of embodiments is described by way of example.

The present disclosure relates to a battery base material suitable for transfer lamination. That is, at least one aspect of the present disclosure provides a battery base material in which the base material comprising a resin can be easily removed in the manufacturing process and which has excellent transferability of the particle layer even when the area is enlarged. In addition, at least one aspect of the present disclosure provides a manufacturing method for the battery base material.

BRIEF DESCRIPTION OF THE DRAWINGS

FIG. 1 is an image diagram showing the manufacturing method for the battery base material.

FIGS. 2A to 2I are explanatory diagrams explaining the manufacturing process of the battery base material and a material layer.

FIG. 3 is a schematic diagram of a device for manufacturing a battery base material and a laminate.

FIG. 4 is a schematic diagram of a binder application step.

FIGS. 5A to 5D are explanatory diagrams of the laminate.

FIGS. 6A to 6D are schematic diagrams of a method for divided application of a binder.

FIG. 7 is a schematic diagram of the undulating structure of a coating film.

FIGS. 8A to 8C are schematic diagrams explaining a part of the material layer with exposed particle.

DESCRIPTION OF THE EMBODIMENTS

In the present disclosure, the expression of "from XX to YY" or "XX to YY" indicating a numerical range means a numerical range including a lower limit and an upper limit which are end points, unless otherwise specified. Also, when a numerical range is described in a stepwise manner, the upper and lower limits of each numerical range can be arbitrarily combined. In addition, in the present disclosure, for example, descriptions such as "at least one selected from the group consisting of XX, YY and ZZ" mean any of XX, YY, ZZ, the combination of XX and YY, the combination of XX and ZZ, the combination of YY and ZZ, and the combination of XX, YY, and ZZ.

In the present disclosure, in a state where a layer of material particle is completed on a first base material as an intermediate transfer body, a binder is permeated between the particles to form a resin-comprising coating film that is the second base material. After that, the first base material is peeled off, and a material layer that is an integrated body of the particle and the resin-comprising coating film can be obtained. In addition, the material layers can be laminated to obtain a laminate.

The resin-comprising coating film, which is the second base material, contributes little to the battery characteristics, and is therefore removed during the manufacturing process of the material layer or laminate. According to the present disclosure, the amount of the second base material (resin-comprising coating) comprised in the laminate can be reduced. This makes it easier to remove the second base material. For example, when removing the second base material by heating, the heating temperature can be lowered and the heating time can be shortened.

It is also possible to form a pattern using material particles, and in this case, the first base material as an intermediate transfer body holds the patterned particles, thereby maintaining the accuracy of the pattern until the integrated body of the particles and the resin-comprising coating film is obtained. Furthermore, material layers can be produced while maintaining the particle pattern, and a laminate of material layers can be obtained.

Specifically, for example, material particles are provisionally fixed, without using a fixing material, as a pattern on a surface with weak adhesivity that has elastic deformation, such as silicone rubber. Then, a treatment liquid comprising a resin is permeated into the gaps in the particle pattern, and after removing a solvent, the material is transferred to a transfer target and laminated. This method allows the particle to be fixed with the minimum amount of resin corresponding to the particle size used, and also allows the resin material to be selected, as appropriate, and used to facilitate the removal thereof in the manufacturing process of the laminate. Details of the manufacturing method for the battery base material and the laminate will be described hereinbelow.

Battery Base Material

The battery base material of the present disclosure is for use in a secondary battery. The battery base material comprises a first base material and a particle layer comprising particle of at least one of an active material and a solid electrolyte, which is arranged on one surface of the first base material.

The particle layer has a resin-comprising coating film that is a second base material. The coating film forms an undulating structure having protrusions and/or depressions on the surface of the particle layer.

In the region where the undulating structure is formed, the total number density of the protrusions and depressions measured using a confocal laser microscope is $1/cm^2$ or more and $40,000/cm^2$ or less.

The battery base material has the first base material. A particle layer comprising particle of at least one of an active material and a solid electrolyte is formed on one surface of the first base material. The first base material functions as an intermediate transfer body for transferring the particle to a material layer described hereinbelow.

It is preferable that one surface of the first base material has an attachment portion. In other words, it is preferable that the particle be arranged at the attachment portion present on one surface of the first base material.

The attachment portion refers to a pressure-sensitive adhesive portion having an attachment force. For example, the surface of a material such as silicone rubber has weak adhesivity and therefore can be used as the first base material having an attachment portion. In addition, the attachment portion may be formed by applying a material having adhesive property such as a pressure-sensitive adhesive to the surface of the first base material.

It is preferable that the first base material has a particle-carrying layer. It is preferable that the particle-carrying layer has a resin portion and an attachment portion. In other words, it is preferable that the particle-carrying layer comprises a resin. In addition, it is preferable that the particle is arranged at the attachment portion of the particle-carrying layer.

The material of the first base material is not particularly limited, and for example, a metal material as a support body surface-coated with silicone rubber as a particle-carrying layer can be used. Details of materials that can be used as the first base material will be described hereinbelow.

The first base material preferably comprises a support and a particle-carrying layer, but only the support can also be used as the first base material.

The particle layer comprises particle of at least one of an active material and a solid electrolyte. The active material and the solid electrolyte may each be used as particle of one type, or a combination of a plurality of particle types. Details of materials that can be used as the active material and the solid electrolyte will be described hereinbelow.

The particles comprised in the particle layer are preferably patterned. There are no limitations on the particle pattern formation method, and a particle layer with a particle pattern formed can be obtained by arranging particles on the first base material by a freely selected patterning means. The particles are held by the attachment force at the interface between the attachment surface, which is the attachment portion of the first base material, and the particles, so regardless of the patterning means used, the particle layer is basically formed to a thickness substantially equivalent to a monolayer of particles.

The method for forming the particle pattern can be suitably selected depending on the particle to be used, and can be a plate-based method such as letterpress or intaglio printing, or a plateless method such as electrophotography. Among these, a patterning method using a mask is preferred. Details of the method for forming the particle pattern will be described hereinbelow.

The particle layer has a resin-comprising coating film. In the present disclosure, the coating film refers to a film that covers the entire or part of the surface of the particle layer. The coating preferably covers 70 to 100% by area of the surface of the particle layer. In other words, the ratio of the area of the region where the coating film is formed to the area of the first base material is preferably 70% by area or more.

It is more preferable that the coating film covers 80 to 100% by area of the surface of the particle layer, and even more preferable that the coating covers 90 to 100% by area of the surface of the particle layer.

For example, the coating film can be formed by applying a solution comprising a resin to the surface of the particle layer. The method for forming a coating film comprising a resin will be described in detail hereinbelow.

The coating film forms an undulating structure on the surface of the particle layer, the undulating structure having protrusions and/or depressions and reflecting the shape of the particle.

Where the coating film does not have an undulating structure, it is difficult to make the thickness of the coating film uniform when the particle layer is made large. For example, when a resin-comprising solution is applied to the entire surface of the particle layer at once, a coating film without an undulating structure is formed, and the coating film becomes thicker in the central region of the particle layer and thinner in the edge region. If the film thickness is uneven in this way, when the particle layer is transferred from the first base material to the desired transfer target, the particle layer may be damaged from thin parts of the coating film, and the transfer may not be successful.

Meanwhile, by forming an undulating structure in the coating film that reflects the shape of the particle within the above-mentioned number density range of $1/cm^2$ or more and $40,000/cm^2$ or less, it is possible to obtain a coating film with an overall uniform film thickness even when the particle layer is made large in area. As a result, when the particle layer is transferred to the desired transfer target in the process described hereinbelow, the particle layer is less likely to be damaged, and the transferability of the particle can be improved.

For example, by divided application of a resin-comprising solution to the surface of the particle layer by the method described hereinbelow, it is possible to form an undulating structure having protrusions and/or depressions.

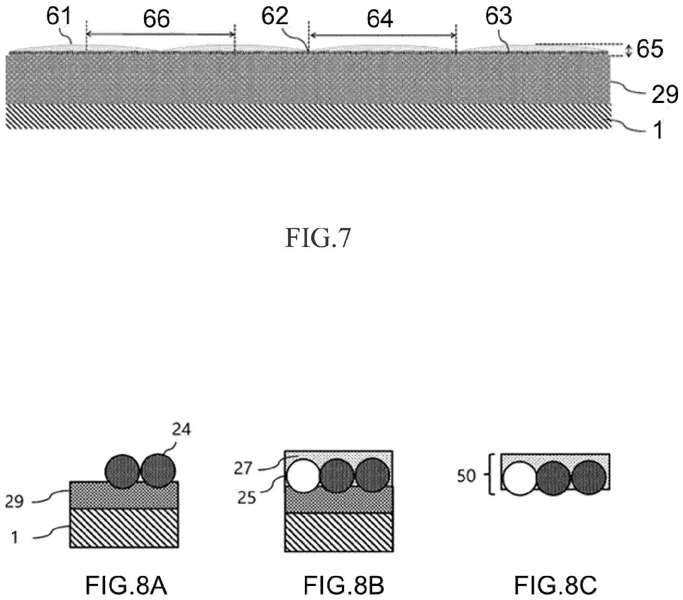

FIG. 7 shows a schematic diagram of the undulating structure. A particle layer comprising particle 63 is arranged on the surface of a particle-carrying layer 29. A coating film having an undulating structure consisting of protrusions 61 and depressions 62 is formed on the surface of the particle layer. Reference numeral 64 denotes one protrusion. In FIG. 7, reference numeral 64 indicates the width of the protrusion 61, and reference numeral 65 denotes the height of the protrusion.

In the region where the undulating structure is formed, the total number density of the protrusions and depressions measured using a confocal laser microscope is from $1/cm^2$ or more and $40,000/cm^2$ or less.

Preferably, the coating film forms an undulating structure having protrusions on the surface of the particle layer, and the number density of the protrusions is $1/cm^2$ or more and $40,000/cm^2$ or less.

The coating film may also have an undulating structure having depressions, and the number density of the depressions may be from $1/cm^2$ or more and $40,000/cm^2$ or less.

In the present disclosure, the number density of the protrusions refers to the number of protrusions per unit area of the coating film, and the number density of depressions refers to the number of depressions per unit area of the coating film.

The total number density of the protrusions and depressions is preferably from 20/cm$^2$ or more and 20,000/cm$^2$ or less, more preferably 25/cm$^2$ or more and 15,000/cm$^2$ or less, and even more preferably from 100/cm$^2$ or more and 10,000/cm$^2$ or less.

By having the total number density of the protrusions and depressions 1/cm$^2$ or more and to 40,000/cm$^2$ or less, the coating film can have a uniform thickness overall. As a result, defects are less likely to occur when the material layer is peeled off from the battery base material, and the transferability of the particle can be improved.

The total number density of the protrusions and depressions can be controlled, for example, by divided application of droplets when applying a solution comprising a resin to the surface of the particle layer. The method for divided application of droplets will be described hereinbelow.

Method for Observing Shape of Battery Base Material

The shape of the protrusions and depressions is observed using a confocal laser microscope. From the observation results, the number density of the protrusions and depressions and the shape of the protrusions (height and undulation width) are measured.

A method for measuring the number density of the protrusions and depressions and the height and undulation width of the protrusions is described below. The number density and shape of the protrusions are measured using a confocal laser microscope (VK-X3000, manufactured by Keyence Corporation). The undulating structure of the coating film can be analyzed using a 3D measurement method in which the position where the focus is achieved is determined by moving the objective lens vertically upward.

Specifically, the shape is observed using the following method, and the number density, height of the protrusions, and the undulation width are measured.

(1) The surface on the side to which the resin has been applied is observed while the battery base material under observation is in close contact with the stage. A laser microscope (VK-X3000, manufactured by Keyence Corporation) and measurement software (observation application for VK-X3000, manufactured by Keyence Corporation) are used for the observation. The measurement conditions are the simple measurement mode of measurement software, scan mode, laser confocal, and observation magnification: 50x.

(2) After setting the surface of the first base material as a reference surface, the shape of the surface on the side to which the resin has been applied is observed based on the microscope observation data. Analysis software (multi-file analysis application for VK-X3000, manufactured by Keyence Corporation) is used for the observation. The observation range is an area of 10 mm × 1 mm.

(3) Profile measurements (length and angle of cross-sectional shape) and surface measurements (measurement of height difference within the surface) are performed within the observation range to quantify the shape and number density of the protrusions and depressions.

In the present disclosure, the above measurements were performed three times, and the arithmetic average value was used. When the area of the battery base material was 10 mm × 10 mm, the same observation was performed three times for the entire battery base material.

The protrusions and depressions were determined as follows. A protrusion is a portion where the coating film is arranged so that the undulation height from the surface of the first base material exceeds the thickness of the particle layer. A protrusion is a portion where the coating film has a maximum height point in the direction toward the outer surface side and is protruded in the direction toward the outer surface side, as determined by the above profile and surface measurements.

A depression is a portion where the coating film is arranged in a thin layer without undulation height. A depression is a portion where the coating film has a minimum height point in the direction toward the first base material (that is, in the depth direction) and is recessed, as determined by the above profile and surface measurements. It is preferable that the height of the recessed portion of the depression does not exceed the thickness of the particle layer.

Specifically, the protrusions and depressions are determined by the following method. From the wavelength distribution obtained by Fourier transforming the cross-sectional profile obtained by the above measurements, components with wavelengths of 100 μm or more and 3000 μm or less are extracted, and further inverse Fourier transform is performed to obtain an extracted distribution of the protrusions and depressions. At this time, the protrusions can be determined by removing low-frequency components and highfrequency components using a known bandpass filter. For example, the protrusions can be determined by analysis using MATLAB (registered trademark) (MathWorks, Inc.).

The undulation width is the distance between the centers of adjacent protrusions (reference number 66 in FIG. 7). When there is only one protrusion in the observation range, the width of one protrusion is measured (reference number 64 in FIG. 7). The measurement is performed three times, and the arithmetic average value of the undulation widths of all the observed protrusions is adopted.

The height of the protrusion from the reference plane is taken as the height of the protrusion. The measurement is performed three times, and the arithmetic mean value of the heights of all the observed protrusions is taken as the average height.

The average height of the protrusions from the surface of the first base material is preferably 1 μm or more and 100 μm or less. The average height refers to the average height of all the protrusions.

The average height of the protrusions is more preferably 1 μm or more and 50 μm or less, and even more preferably 1 μm or more 30 μm or less. By keeping the average height of the protrusions within the above range, the amount of resin in the battery base material can be reduced, and the particle pattern can be prevented from being disturbed during the heating and pressurizing process at the time of transfer.

The average height of the protrusions is preferably 2.0 times or more and 6.0 times or less of the volume-based median diameter of the particle comprised in the particle layer. In other words, the value of the average height of the protrusions divided by the volumetric median diameter of the particle is preferably 2.0 or more and 6.0 or less.

The particle layer may comprise a plurality of particles having different particle diameters. In this case, the median diameter of the particle refers to the volume-based median diameter of all particles comprised in the particle layer.

The volume-based median diameter (D50) of the particle is the cumulative 50% particle diameter in the particle size distribution on a volume-based. The particle diameter can be measured using a laser diffraction scattering type particle size distribution measuring device (LA-960, manufactured by Horiba, Ltd.).

The average height of the protrusions is more preferably 2.0 times or more and 5.0 times or less of the volume-based median diameter of the particle, and even more preferably 2.0 times or more and 4.0 times or less. By satisfying the above, the amount of resin in the battery base material can be reduced, and the particle pattern can be prevented from being disturbed during the heating and pressurizing process at the time of transfer.

The average value of a ratio of the undulation width to the undulation height of the undulating structure is preferably 10.0 or more and 250.0 or less.

The undulation height of the undulating structure refers to the average height of the above-mentioned protrusions. The undulation width is the distance between the centers of adjacent protrusions (reference numeral 66 in FIG. 7). As indicated above, when there is one protrusion in the observation range, the undulation width is the width of one protrusion (reference numeral 64 in FIG. 7). The center of the protrusion refers to the point with the largest height from the surface of the first base material. The distance between the centers of the protrusions refers to the distance from the center of the protrusion to the center of the adjacent protrusion.

The average value of a ratio of the undulation width to the undulation height is more preferably 10.0 or more and 200.0 or less, and even more preferably 30.0 or more and 150.0 or less. By setting the ratio of the undulation width to the undulation height within the above range, the particle layer can easily follow the transfer target side during transfer, and a coating film having a more uniform film thickness overall can be obtained. As a result, even after the first base material is peeled off in the process described hereinbelow, defects are less likely to occur in the particle layer, and the transferability of the particle can be further improved.

The height and undulation width of the protrusions can be controlled by the conditions for applying the resin solution to the surface of the particle layer. For example, in the divided application described hereinbelow, the shape of the protrusions can be controlled by changing the number of divided applications to control the size of the droplets to be applied or by changing the resin content in the solution. Furthermore, the shape of the protrusions can also be controlled by changing the time interval for applying the droplets in the divided application or by controlling the temperature of the first base material and particle layer to which the droplets are applied.

The time interval and temperature during droplet application are preferably adjusted according to the type of solvent used to prepare the resin solution, the resin content in the resin solution, and the materials of the first base material and particle layer to which the droplets are to be applied. For example, when a 5% by mass resin solution prepared using N-methyl-2-pyrrolidone (NMP) as a solvent is applied to the surface of the particle layer on which the active material particles are arranged, the temperature of the first base material and particle layer is preferably from 80 to 180°C, and more preferably from 100 to 150°C.

For example, by increasing the resin content in the resin solution, the height of the protrusions can be increased.

For example, by decreasing the diameter of the applied droplets, the undulation width of the protrusions can be decreased, and by increasing the diameter of the applied droplets, the undulation width of the protrusions can be increased. Where the diameter of the droplets is to be decreased, the required amount of resin can be applied by increasing the number of times the resin solution is divided.

Details of the method for divided application of the resin solution will be described hereinbelow.

The height and undulation width of the protrusions can be measured by the above-mentioned method using a confocal laser microscope (VK-X3000, manufactured by Keyence Corporation).

Method for Manufacturing Battery Base Material

Below, a method for manufacturing the battery base material of the present disclosure will be described step by step.

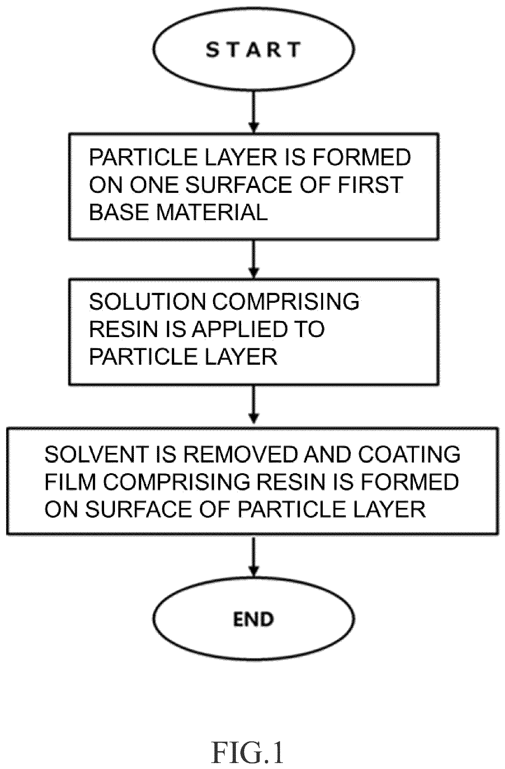

FIG. 1 is a flowchart of the method for manufacturing a battery base material.

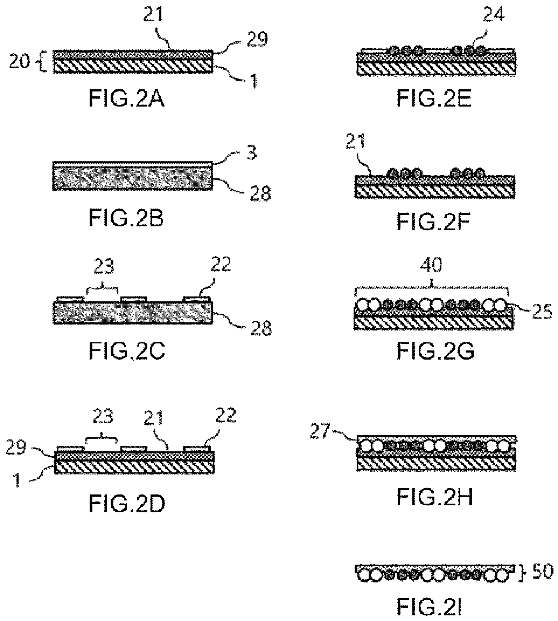

FIG. 2 is a schematic diagram showing a specific example of the method for manufacturing a battery base material in the order of steps.

The method for manufacturing a battery base material includes a particle layer formation step of arranging material particles on the first base material to form the particle layer, and a coating film formation step of forming a resin-comprising coating film, which is the second base material, on the surface of the formed particle layer.

Particle Layer Formation Step

Below, an example in which the particles comprised in the particle layer are arranged in a pattern using a mask is described, but the method for arranging the particles is not limited to this embodiment. The active material and/or solid electrolyte comprised in the particle layer may be of a single particle type, or a plurality of particle types may be used in combination. In addition, the plurality of particles may comprise first particle, second particle, third particle, ... n-th particle. For example, a plurality of particle types can be arranged by using multiple masks.

In the particle layer formation step, particles are arranged on one surface of the first base material to form a particle layer. The particles are of at least one of an active material and a solid electrolyte.

The step of arranging a plurality of particles on the attachment surface preferably includes a first step of forming a mask on the attachment surface, a second step of arranging first particle on a non-formation portion of the attachment surface where the mask is not formed, a third step of removing the mask from the attachment surface, and a fourth step of arranging second particle on a non-arrangement portion of the attachment surface where the first particle is not arranged.

FIGS. 2A to 2G show a specific example of the particle layer formation step in the order of steps.

First, a particle-carrying layer 29 is formed on the surface of support A 1 to obtain a first base material 20 (intermediate transfer body) having an attachment surface 21 (FIG. 2A).

Next, a mask 22 having openings 23 is formed on the attachment surface 21 of the first base material 20 (FIG. 2D).

A method for forming the mask 22 is not particularly limited and known means can be adopted. For example, a mask layer 3 is formed on the surface of the support B 28 prepared separately, and the mask 22 is formed by patterning so as to obtain the desired openings 23 (FIG. 2C). For example, a UV laser can be used as a patterning means. Then, the support B 28 on which the mask 22 has been formed and the first base material 20 are brought into contact with each other so that the mask 22 adheres to the attachment surface 21 of the first base material, and the mask 22 is transferred from the support B 28 to the attachment surface 21.

Then, the first particle 24 is arranged in the opening 23, which is the non-formation portions of the attachment surface 21 where the mask 22 is not formed (FIG. 2E). The first particle 24 is an active material or a solid electrolyte. This allows the first particle 24 to adhere to the attachment surface 21 of the first base material 20.

Then, the mask 22 is removed from the attachment surface 21 (FIG. 2F). The method for removing the mask 22 is not particularly limited, and known means can be adopted. For example, the mask 22 can be removed by a mask removal unit described hereinbelow.

By removing the mask, the attachment surface 21 in the non-arrangement portions where the first particle is not arranged is newly exposed on the surface of the particle-carrying layer 29. Second particle 25 is arranged on the attachment surface 21 in the exposed non-arrangement portions where the first particle is not arranged (FIG. 2E). The second particle 25 is an active material or a solid electrolyte. The second particle 25 may be the same as the first particle 24, or may be different. That is, the first particle and the second particle 25 may both be of active material or a solid electrolyte.

As a result, the second particle 25 can be attached to the attachment surface 21, and a pattern of the first particle and the second particle is formed on the surface of the particle-carrying layer 29. That is, the above method makes it possible to form a particle layer comprising particle of at least one of an active material and a solid electrolyte on one surface of the first base material.

Coating Film Formation Step

In the coating film formation step, a coating film comprising a resin, which is the second base material, is formed on the surface of the particle layer formed in the particle layer formation step. The coating film process will be described in detail hereinbelow.

A binder 27 is filled between the particles in the pattern of the first particle and the second particle of the particle layer formed in the particle layer formation step. The binder 27 is a solution comprising a resin. The resin comprised in the binder 27 is preferably peelable from the attachment surface 21. The binder can hold the particle layer and form a coating film comprising the resin.

The resin-comprising solution is filled between the particles comprised in the particle layer and at the same time forms protrusions of an undulating structure on the surface of the particle layer. That is, a coating film having an undulating structure is formed on the surface of the particle layer.

As a result, a battery base material of the present disclosure can be obtained, which includes a first base material and a particle layer, the particle layer having a coating film comprising a resin which is the second base material, and the coating film forming an undulating structure having protrusions and/or depressions along the surface of the particle layer. For example, a resin solution comprising a resin is permeated between the particles, and then the solvent in the resin solution is removed by drying to obtain a battery base material that is an integrated body of the first base material, the particle layer, and the coating film comprising the resin (FIG. 2H).

The resin solution comprises a resin and a solvent. The resin solution is applied to the particle layer as droplets. The resin solution permeates and fills the spaces between the particles by capillary action, and the solution comprising the resin that is not filled between the particles is present with a thickness on the surface of the particle layer. In other words, on the surface of the particle layer after the droplets are applied, the resin is present in a dot shape with a thickness, and an undulating structure having protrusions and/or depressions is formed.

A method for applying the droplets is not particularly limited, and for example, a dispenser or a micropipette can be used. Among them, it is preferable to apply the droplets using a dispenser.

Then, a coating film comprising the resin can be formed by removing the solvent from the resin solution.

In other words, the coating film formation step includes a step of applying droplets of a resin solution comprising a resin and a solvent to the surface of the particle layer, and a step of removing the solvent to form a coating film comprising the resin.

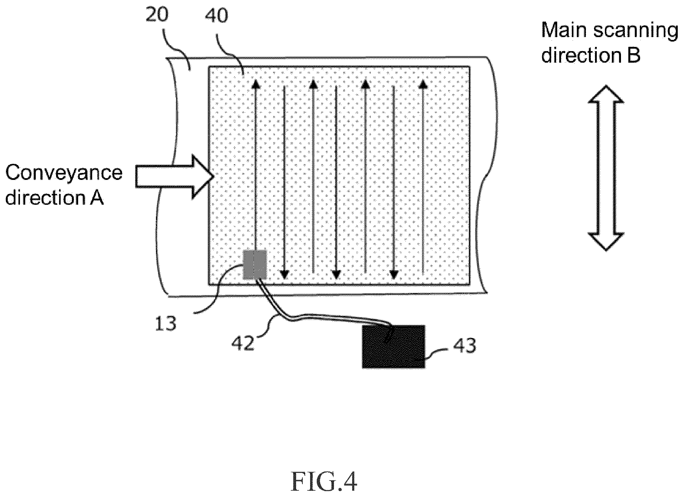

A method for applying a solution comprising the resin to the particle layer will be explained using FIG. 4 as an example. A preferred method for applying the resin solution is to use a liquid discharge dispenser 13 as shown in FIG. 4.

In the example shown in FIG. 4, the resin solution is filled in a supply section 43 and supplied to the liquid discharge dispenser 13 through a supply tube 42. The first base material 20 having a particle layer 40 arranged on its surface is conveyed in a conveyance direction A. The liquid discharge dispenser 13 applies droplets of the resin solution to the particle layer 40 while moving along a main scanning direction B.

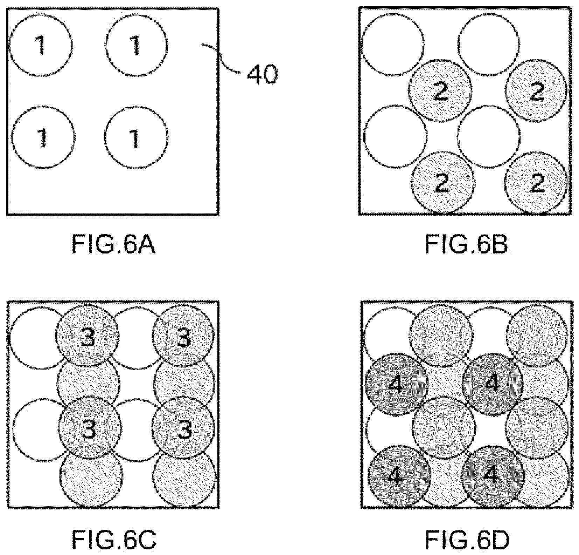

A specific method for divided application will be described with reference to FIGS. 6A to 6D.

FIGS. 6A to 6D show a method for divided application of a resin-comprising solution to the surface of a particle layer in four separate applications.

In the first pass, 1/4 of the solution amount to be applied is applied as droplets to the surface of the particle layer 40 (FIG. 6A). Next, in the second pass, 1/4 of the solution amount to be applied is applied to the regions where no droplets were applied in the first pass (FIG. 6B). Similarly, in the third pass, 1/4 of the solution amount is applied to the regions where no droplets were applied in the first and second passes (FIG. 6C). Finally, in the fourth pass, 1/4 of the solution is applied to the regions where no droplets were applied in the first to third passes (FIG. 6D). After four applications, the total amount of the solution applied is arranged in dots on the surface of the particle layer.

The droplets comprising the resin are applied to the surface of the particle layer and arranged in dots.

For example, in the divided application method shown in FIGS. 6A to 6D, the droplets applied consecutively in each pass are applied with a gap with the droplet that has been previously applied, so that the droplets do not coalesce. The arranged droplets thicken or dry while the droplets of the next pass are applied.

The droplets of the next pass are independently arranged in dots at positions where no droplets were applied in the previous pass, or at positions where the droplets applied in the previous pass have thickened or dried. The above operation is repeated until the resin-comprising droplets are arranged in a predetermined area. Hereinafter, this operation is also referred to as divided application.

Although FIGS. 6A to 6D show four cycles of droplet application, with four droplets applied in each cycle, the number of cycles and the number of droplets applied in each cycle are not limited. For example, the number of droplet applications per 1 $cm^2$ is preferably from 1 to 40,000, more preferably from 20 to 20,000, even more preferably from 25 to 15,000, and even more preferably from 100 to 10,000.

The amount of droplets of resin solution applied is not particularly limited, but is preferably controlled so that the resin is applied so as to be capable of forming an undulating structure that reflects the shape of the particle.

The step of applying the droplets of resin solution preferably includes the following steps (i) to (iv)

(i) a step of dividing the surface of the particle layer into a plurality of blocks;
(ii) a step of applying the droplets to a portion of the area of the blocks;
(iii) a step of allowing the applied droplets to stand and thicken or dry; and
(iv) a step of further applying droplets to position where the droplets were not applied in the step (ii) or positions overlapping with the droplets thickened or dried in the step (iii).

It is preferable to apply the droplets to the entire area of the block by repeating the above steps (ii) to (iv). It is also preferable that the droplets applied in steps (ii) and (iv) are applied successively while leaving a gap between the droplets that have been previously applied so that the droplets do not coalesce.

As described above, the resin solution comprises a resin and a solvent. The droplets of the resin solution applied to the surface of the particle layer thicken or dry over time as the solvent evaporates. That is, in step (iii), the droplets are thickened or dried by leaving a certain time between performing step (ii) and performing step (iv).

It is preferable that the time between performing step (ii) and performing step (iv) is adjusted depending on the type of solvent used to prepare the resin solution, the resin content in the resin solution, and the first base material and particle layer to which the droplets are applied.

In addition, when the droplets are applied to positions that overlap with the thickened or dried droplets in step (iv), the newly applied droplets may completely overlap the thickened or dried droplets, or may only partially overlap. Even when droplets are arranged so as to overlap each other, the thickened or dried droplets and the newly applied droplets do not coalesce. Therefore, it is possible to apply further droplets onto droplets that have already been thickened or dried.

Step (iv) is preferably a step of applying further droplets to positions to which the droplets have not been applied in step (ii). It is preferable to apply the droplets with a gap equal to or greater than the dot diameter of the droplets that have been previously formed. It is preferable to repeat the operation of applying the next droplet to a position that does not overlap with the position where a droplet has been previously applied, and apply the droplets to the entire surface on which the coating film is to be formed. This makes it easy to form an undulating structure.

By applying the droplets by the above-mentioned method, it is possible to prevent the droplets from coalescing on the surface of the particle layer, and to form a coating film having an undulating structure of a specific shape on the surface of the particle layer.

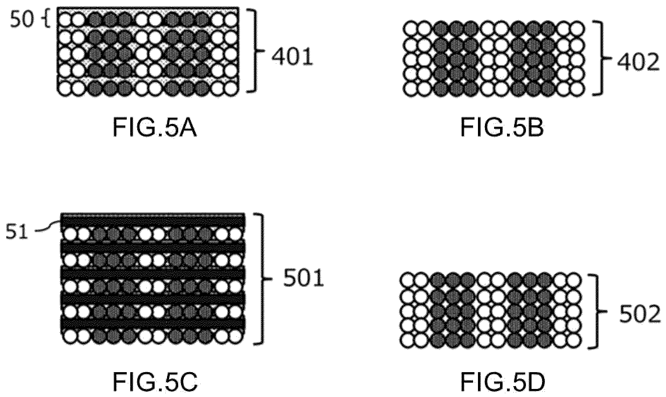

Then, the first base material is peeled off from the obtained battery base material, and a material layer 50 in which the particle layer and the resin-comprising coating film are integrated can be obtained (FIG. 2I). In addition, a laminate 401 can be obtained by stacking a plurality of the obtained material layers 50 (FIG. 5A). The battery base material and laminate can be used as materials for a secondary battery.

Device for Producing Battery Base Material and Laminate

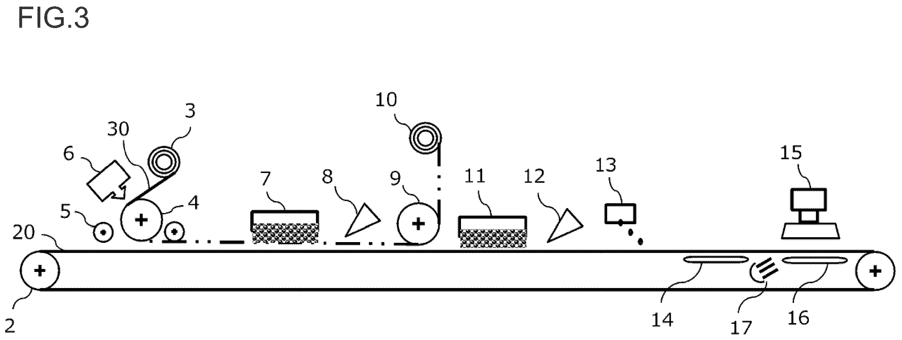

FIG. 3 shows an example of a device 100 for producing a battery base material and a laminate. This device is, for example, for manufacturing a battery base material comprising a positive electrode material, obtaining a positive electrode material layer by peeling off the first base material from the battery base material, and further manufacturing a positive electrode material layer laminate.

With the device shown in FIG. 3, for example, a PET film mask with openings made by a UV laser 6 is attached onto a first base material 20 having a surface made of silicone rubber as a particle-carrying layer. Then, particle of a battery positive electrode material is supplied by a first particle supply unit 7, and after the mask is peeled off, particle of a battery solid electrolyte is supplied by a second particle supply unit 11 to form a particle layer 40.

Furthermore, a treatment liquid in which a resin is dissolved is applied to the surface of the particle layer by a liquid discharge dispenser 13 according to the above-mentioned method, and is supplied and permeated into the gaps between the particles. After that, the solvent in the resin solution is removed to produce a battery base material having a coating film of a specific shape. Also, the particle layer having the resin-comprising coating film is peeled off from the battery base material to produce a positive electrode material layer. Furthermore, this material layer is laminated by a lamination device 15 to produce a laminate of positive electrode material layers.

The production device 100 shown in FIG. 3 will be described hereinbelow.

The production device 100 is equipped with a processing means for executing the steps shown in FIG. 2, centering on the first base material 20 arranged as an intermediate transfer body in a belt-like shape, and a conveying device 2 for conveying the first base material 20 between steps. The first base material 20 has the above-mentioned attachment surface 21.

In FIG. 3, the first base material 20 is in the form of a belt, but the shape of the first base material is not particularly limited. For example, the first base material 20 may be in the form of a roller or a flat plate. The material and shape of the first base material will be described in detail hereinbelow.

The production device 100 is equipped with a mask layer attachment unit including a mask layer supplying means 30 for supplying the mask layer 3 and a pressure roller 4, a mask production unit 6 (e.g., a UV laser generator), a first particle supply unit 7, and an air blower 8 as necessary, centering on the conveying device 2 that drives the first base material 20.

The production device 100 is equipped with a mask removal unit including a peeling roller 9 and a winding device 10. The mask removal unit removes the mask 22 from the attachment surface 21 on which the first particle 24 is arranged.

The production device 100 also includes a second particle supply unit 11 and, if necessary, an air blower 12. The second particle supply unit 11 arranges second particle 25 on the attachment surface 21 exposed in the portion from which the mask 22 has been removed (FIGS. 2E to 2G).

The production device 100 includes a liquid discharge dispenser 13 as a means for applying a treatment liquid comprising a binder 27 to fill the particles with the binder. The production device 100 also includes a solvent removal promotion means 14 for removing the solvent after applying the treatment liquid.

As the treatment liquid, a resin solution comprising the above-mentioned resin and solvent can be used. The solvent can be removed by drying or the like. The solvent removal promotion means 14 is, for example, a heating means such as a hot plate.

The liquid discharge dispenser applies droplets of the resin solution to the surface of the particle layer by the above-mentioned method. That is, the resin solution is filled between the first particle and the second particle by the liquid discharge dispenser 13, and the solvent is removed by the solvent removal promotion means 14, so that a resin-comprising coating film, which is the second base material, is formed on the surface of the particle layer. As a result, a battery base material is obtained that includes the first base material and the particle layer, and in which the resin-comprising coating film having a specific shape is formed on the surface of the particle layer.

The material layer 50 can be obtained by peeling the particle layer having the resin-comprising coating film from the battery base material. That is, the material layer 50 has a configuration in which the first base material is removed from the battery base material.

The production device 100 includes a lamination device 15 for laminating the material layer 50. The material layers are laminated while the binder is heated by a heater 16, and the material layer can be laminated while being peeled off from the first base material by cooling the binder by a cooling fan 17.

By sequentially performing processing in these units, a battery base material, a material layer, and a laminate in which the material layer is laminated can be manufactured.

The device in FIG. 3 is configured to process each step in a series, but this configuration is not limiting and each step may be divided as appropriate. The following description will be given using the device in FIG. 3 as an example.

The first base material 20 needs to have the characteristics such that the particles could be transferred while the material particles are being held on the surface. To achieve this, the first base material 20 has the attachment surface 21. The outer surface of the first base material 20 becomes the attachment surface 21.

For example, the first base material 20 has the particle-carrying layer 29 having the attachment surface 21. That is, it is preferable that the first base material has a support 1 and a particle-carrying layer 29 having the attachment surface 21 laminated on the support 1.

The first base material 20 temporarily holds the particles and is eventually peeled off from the battery base material. That is, the first base material transfers the particle layer to the desired transfer target. Therefore, the particle-carrying layer 29 needs to have the characteristics such that the material layer could be peeled off. A preferable characteristic is that the particle-carrying layer 29 is an elastic deformation layer.

If the particle-carrying layer 29 is a rigid body, the contact points with the particles held on the surface are likely to be point contacts, and the contact area is likely to be small. As a result, a strong attachment force is required to hold the particles, which may result in incomplete peeling of the material layer in the transfer process, or damage to parts of the material layer or the surface of the first base material.

Meanwhile, if the particle-carrying layer 29 is an elastic deformation layer, parts of the contact points of the particles sink into the particle-carrying layer, and the contact area becomes large. As a result, the particles can be reliably held with a weaker attachment force than when the particle-carrying layer is a rigid body, so the material layer can be peeled off stably without damage. In other words, the transferability of the particle layer can be improved.

Meanwhile, if an attachment layer is a plastic deformation material, the particles are held in a buried state, which may make it difficult to peel off the material layer. The amount of sinking of the particles can be controlled by the rubber hardness of the intermediate transfer body surface. That is, the particle-carrying layer 29 preferably has an appropriate degree of elastic deformation and a hardness sufficient to hold the particles without completely burying them.

In addition, as another characterostic that stabilizes the peeling (transferability) from the first base material, it is desirable that the attachment surface 21 has low compatibility (adhesion and solubility) with the treatment liquid comprising the resin. Therefore, it is preferable to select the particle-carrying layer 29 having the attachment surface 21 based on compatibility thereof with the treatment liquid, especially the solvent of the treatment liquid.

As a specific material for the particle-carrying layer 29 that satisfies the above characteristics, when a water-based treatment liquid is used as the resin solution, urethane rubber is preferable. Furthermore, fluororubber and silicone rubber are more preferable because they can be used with a wide range of materials, not limited to water-based treatment liquids. In particular, silicone rubber is suitable because it has a wide range of adjustment for adhesivity and rubber hardness. The particle-carrying layer 29 does not need to be made of a single material, and multiple types can be used in combination depending on the characteristics.

For example, the attachment force of the attachment surface 21 measured by a peeling analysis device is preferably 0.2 mN/20 mm to 10 mN/20 mm, more preferably 0.4 mN/20 mm to 5 mN/20 mm, even more preferably 0.5 mN/20 mm to 5 mN/20 mm, and still more preferably 0.5 mN/20 mm to 2 mN/20 mm.

The attachment force can be measured using a VPA-3 manufactured by Kyowa Interface Science Co., Ltd. In the present disclosure, the measurement was performed under the following measurement conditions.

In the examples described hereinbelow, the sample size was 20 mm wide and 150 mm long. The measurement conditions were a peel angle of 90°, a measurement temperature of 25°C, and a peel speed of 300 mm/min. A PET film was used as the target base material.

From the viewpoint of adequately holding the particles, the attachment force is preferably 0.2 mN/20 mm or more. From the viewpoint of better transferability, the attachment force is preferably 10 mN/20 mm or less.

As for elastic properties, the rubber hardness of the attachment surface 21 is preferably from 10° to 80° (JIS type A, durometer hardness according to JIS K6253-3), more preferably from 15° to 40°, even more preferably from 18° to 40°, and even more preferably from 18° to 30°.

When the rubber hardness of the attachment surface 21 is in the above range, the particles can be held without being completely buried, and the attachment surface can be easily peeled off from the material layer in a stable manner.

The thickness of the particle-carrying layer 29 is preferably, for example, from 10 to 200 $\mu$m, or from 40 to 120 $\mu$m. When the thickness of the particle-carrying layer 29 is in the above range, the degree of elastic deformation is kept appropriate, and the particles can be held without being completely buried. Therefore, the material layer can be easily peeled off from the attachment surface in a stable manner.

Specifically, the material of the particle-carrying layer 29 forming the attachment surface 21 preferably comprises silicone rubber, urethane rubber, or fluororubber. It may also be a mixture of any of the above materials with other materials.

For example, the particle-carrying layer 29 preferably comprises at least one selected from the group consisting of silicone rubber, urethane rubber, and fluororubber. It is more preferable that the particle-carrying layer 29 comprises silicone rubber, and even more preferable that the particle-carrying layer is silicone rubber.

The particle-carrying layer 29 preferably comprises 10 to 100% by mass, more preferably 50 to 100% by mass, and even more preferably 80 to 100% by mass, of at least one selected from the group consisting of silicone rubber, urethane rubber, and fluororubber.

The particle-carrying layer 29 preferably comprises 10 to 100% by mass, more preferably 50 to 100% by mass, and even more preferably 80 to 100% by mass of silicone rubber.

The support 1 of the first base material 20 is not limited, and known materials can be used depending on the application. For example, plastics such as polyamide resins, polyimide resins, polyacetal resins, and polyester resins, and metal materials such as aluminum, stainless steel (SUS), and Invar alloy can be used as the support. In addition, if the first base material is in a roll or flat shape, glass, ceramics, etc. can also be used as the support.

For example, the surface of the support 1 can be coated with silicone rubber as the particle-carrying layer 29 to an appropriate thickness, and the first base material 20 can be made into a belt shape.

The particle-carrying layer 29 is easily stretched and may not have stable dimensional accuracy if used alone, so it is preferable to use a rigid body as the support. In the device 100 shown in FIG. 3, the lamination device 15 uses a heat pressing method, so it is preferable to use Invar material, which has high thermal conductivity and high dimensional stability, as the support.

When the first base material 20 is in the form of a belt, the thickness of the support 1 is not particularly limited, but may be, for example, 0.01 to 1.0 mm, or 0.05 to 0.5 mm.

A method for forming the particle pattern on one surface of the first base material is not limited. General patterning techniques can be adopted. For example, the above-mentioned method for forming a mask can be used to arrange particles in a freely selected pattern on one surface of the first base material.

For example, a method can be used in which a polyester film is used as the mask layer 3, and the mask 22 in which openings are made on the glass pressure roller 4 by a UV laser is attached to the first base material 20 by the pressure roller 4. The attachment surface 21 of the first base material 20 has an attachment force sufficient to allow peeling, and this can be utilized to hold the mask 22.

Next, battery positive electrode material particles are applied as the first particles to the non-formation portions of the mask. Particles adhere to the attachment surface 21 exposed in the mask opening after the mask film is peeled off, and a pattern is formed. Next, solid electrolyte particle is applied as second particle to the non-arrangement portions on the attachment surface 21 where the first particle is not arranged. As a result, the second particle selectively adhere to the portions where the first particle has not been attached, i.e., the portions where the attachment surface is exposed, completing a pattern made of two particle materials.

Therefore, the method for manufacturing the battery base material has a first step of forming a mask on the attachment surface 21. The means for forming the mask is not particularly limited, and may include, for example, a step of providing the mask layer 3 on the attachment surface 21 and a step of forming opening 23 in the mask layer 3 to form the mask 22.

The production device 100 shown in FIG. 3 has, for example, a supply means for supplying the mask layer 3, the UV laser 6 as a means for forming the opening 23 in the mask layer 3, and the pressure roller 4 as a means for attaching the mask 22 to the attachment surface. It may also have a cleaning roller 5 as necessary.

There are no restrictions on the mask layer 3, and a material that is uniform in thickness and easy to process is suitable. For example, plastics such as polyimide resins, polyacetal resins, and polyester resins, and metal foils such as aluminum, stainless steel (SUS), and Invar alloy are available in high quality on the market, so it is suitable to use these. Plastics are preferred, and polyester films are preferable.

It is desirable to select a thickness for the mask that is equal to or less than the diameter of the particle material used. The arrangement of the first particle is not limited to a thin film equivalent to a particle monolayer, but is particularly suitable for forming a thin film equivalent to a particle monolayer. That is, the thickness of the arranged particle layer is, for example, 0.80 to 1.20 times, or 0.90 to 1.10 times the average particle diameter of the first particle. It is preferable that the arranged particle layer is approximately a monolayer. This is because, in principle, the degree of freedom in the arrangement of the particle pattern is greatest when a laminate is made by stacking sheets that are two-dimensionally patterned to a thickness equivalent to a particle monolayer.

The thickness of the mask is preferably 0.10 to 1.10 times of the average particle diameter of the first particle, more preferably 0.20 to 1.00 times, and even more preferably 0.20 to 0.50 times. Examples of the thickness of the mask layer include 0.5 to 100 $\mu$m, 1 to 50 $\mu$m, and 1 to 5 $\mu$m.

Within the above ranges, the thicker the mask, the greater the durability of the mask, making it easier to handle and increasing the number of times it can be used repeatedly. This is suitable for cases where there are few pattern changes or when making large quantities. Meanwhile, the thinner the mask, the less material is required, so this is suitable for cases where there are many pattern changes or for small-scale production. In other words, it is preferable to select the thickness of the mask appropriately within the above ranges depending on the degree of pattern change and the required amount.

There are no restrictions on the method for forming the openings, and it is preferable to select an appropriate method depending on the material of the mask layer and the resolution of the design pattern. If there are few pattern changes and high resolution is desired, a method such as etching a metal foil using photolithography is suitable. Meanwhile, when a relatively low resolution is sufficient, a method for making an opening in a resin film using a thermal head is suitable. For example, the opening can be formed by a UV laser or the like.

The shape of the mask portion is not particularly limited, and can be, for example, striped or honeycomb. The width of the opening in the case of a striped shape is not particularly limited, but can be, for example, 1 to 200 $\mu$m, or 2 to 100 $\mu$m. The width of the mask portion in the case of a striped shape is also not particularly limited, and can be, for example, 1 to 200 $\mu$m, or 2 to 100 $\mu$m.

The mask opening 23 may be formed with the mask layer 3 attached to the first base material 20, but from the viewpoint of protecting the surface of the particle-carrying layer from contamination or damage, it is preferable to form the mask layer 3 on a separate support member (support 28), form the opening, and then transfer the mask layer to the first base material.

As the support member used to form the opening, for example, a material with a lower absorption rate of the laser radiation used than the mask layer is suitable. Specifically, when a thin plastic mask is used as the mask layer, it is preferable to use glass as the support member. Plastics have a higher absorption rate than glass for $CO_2$ lasers and UV lasers. Glass is also preferable because it is a material on which high surface smoothness can be easily created.

In the production device 100 in FIG. 3, the pressure roller 4 is used as the support member. The pressure roller 4 can be, for example, a glass cylinder. The support member may be a flat plate type, or it can be made into a roll shape by using a flexible material such as polyimide film or SUS foil.

The technology for machining glass cylinders with high precision has become commonplace, and is also preferable because it is currently used for production in a wide range of industries, and thus is readily available. In the case of laser processing, the focal length has a large effect on the precision, so high-precision glass cylinders are preferred. The mask layer 3 conveyed on the pressure roller 4 can be perforated to form the openings 23.

In the production device 100 shown in FIG. 3, a polyester film that is the material of the mask layer 3 wound in a roll shape is fed by the pressure roller 4 while being irradiated with a UV laser 6 according to the design pattern to perform perforation. Then, the mask is continuously attached to the attachment surface 21 of the first base material 20, and the subsequent particle supply step and the following mask peeling step are performed in a consistent manner, but this process is not limiting.

For example, a configuration in which a sheet-like film is batch processed can also be adopted.

The advantage of using a roller-shaped material for producing openings as the mask layer 3 is that the curvature can be utilized, thereby facilitating the handling of the mask transfer.

By using an elastic body as the particle-carrying layer 29 on the surface of the first base material 20, a mask made of a thin film can be attached and pressurized without any problems to the surface of the first base material 20, even if the pressure roller is a rigid body such as glass.

In the device shown in FIG. 3, material particles of two types are patterned with one mask, but by using multiple masks, patterns of three or more types of materials can be fabricated.

Following the first step, a second step is performed in which the first particles are arranged on the non-formation portions of the mask on the attachment surface 21. That is, the first particles are arranged after a mask with openings formed therein has been arranged on the first base material 20.

A method for supplying the first particles is not particularly limited, and any known method can be widely applied. Specifically, the particles can be sprinkled by gravity and spread by vibration, attached by spraying, or supplied using a roller, brush, or blade. If it is desired to densely pack the particles in the mask openings, it is preferable to apply a rubbing force.

Among these, when a mask is used, rubbing using magnetic particle is preferable. That is, the arrangement of the first particle is preferably performed by carrying the first particle using magnetic particle as a carrier material, and rubbing the first particle against the attachment surface 21. The first particle can be carried by forming a magnetic brush using magnetic particle as a carrier material. The rubbing force can be easily changed according to the particle to be arranged by controlling the magnetic force. If large magnetic particle is used, the particle can be filled while pressing the mask against the transfer body, so good compatibility is achieved. The first particle may be a single material, or a premix of a plurality of types of particles. Of course, the particle surface may be subjected to a surface treatment or coating.

In the device 100 shown in FIG. 3, the first particle supply unit 7 uses magnetic particle carrying the material particle on the surface, and the patterning area is rubbed by operating the back magnet to increase the particle density.

In addition, after the second step of disposing the first particle on the non-formation portions of the mask, an excess particle removal step may be performed to remove excess particles. The device 100 shown in FIG. 3 has an air blower 8 as an excess particle removal means for facilitating the removal of particle placed in two layers on the monolayer particle after the pattern is completed.

The intermediate transfer body and the particles are held by the pressure-sensitive attachment force at the interface, so in principle, the particles can be held to a thickness approximately equal to that of the monolayer particles, regardless of the patterning means used.

The method for manufacturing the material layer has a third step of removing the mask from the attachment surface. A means for removing the mask is not particularly limited, and a well-known means may be used. For example, the mask may be peeled off. As a mechanism for peeling off the mask from the first base material, the device shown in FIG. 3 uses a method in which the mask is wound up in the form of a continuous film by a peeling roller 9 and a winding device 10.

Next, the fourth step is performed in which the second particle is arranged on the non-arrangement portions of the attachment surface 21 where the first particle is not arranged. That is, the second particle is arranged on the mask peeling portions. Since the particle-carrying layer of the first base material protected by the mask is exposed, the second particle is selectively adhered thereto. The second particle may be the same as the first particle, or may be different. That is, both the first particle and the second particle may be active material or solid electrolyte.

The supply method is not limited, and can be selected according to the particle to be used, just like the arrangement of the first particle. In FIG. 3, the production device 100 is provided with a second particle supply unit 11.

The second particle supply unit 11 may be the same as the first particle supply unit 7. After the second particles are supplied, excess particles may be removed in the same manner as after the arrangement of the first particles. For example, in FIG. 3, the production device 100 includes the air blower 12.

In the device shown in FIG. 3, a pattern consisting of two types of particles is formed using one mask, but this process is not limiting, and for example, if two masks are used with a shift, a pattern consisting of three types of particles can be obtained by repeating the same steps.

Next, a solution comprising a resin that can be peeled off from the attachment surface 21 is filled between the plurality of particles arranged on the attachment surface 21. For example, droplets of a solution in which a resin is dissolved are applied to the surface of the particle layer by the above-mentioned method. This forms a coating film having an undulating structure on the surface of the particle layer. As a result, a battery base material having a first base material and a particle layer, and also a coating film comprising a resin on the surface of the particle layer can be obtained.

There is no restriction on the method for supplying the resin solution, and a known method can be used. For example, as described above, a liquid discharge dispenser 13 or a micropipette can be used as a means for applying the resin solution. From the viewpoint of holding the particle layer with a smaller amount of resin, a coating means that supplies the resin solution to a predetermined position on the particle layer, such as a liquid discharge dispenser, is preferable. Also, from the viewpoint of maintaining the particle arrangement pattern, a non-contact liquid discharge dispenser is preferable.

The droplets of the resin solution are preferably applied by the above-mentioned divided application method.

The resin comprised in the resin solution is not particularly limited as long as it is a material that can hold the particles and can be peeled off from the attachment layer. Thermoplastic resins are more preferable as the resin.

The resin is preferably a polyester resin, a polyolefin resin, a vinyl resin such as ethylene vinyl acetate, a fluororesin such as polyvinylidene fluoride, a cellulose resin such as carboxymethyl cellulose, a rubber resin such as styrene-butadiene copolymer rubber, or the like.

The resin preferably comprises at least one selected from the group consisting of, for example, acrylic resins, polyester resins, and polyolefin resins. These resins are preferably comprised because it is easier to control the undulating structure of the coating film to a preferable shape. A combination of a plurality of resin types may be used.

Furthermore, the resin may be a material having ionic conductivity. In addition, thermosetting resins, UV-curable resins, and two-liquid reaction curable resins are also suitable. Acrylic resins are particularly preferred.

The solvent in the resin solution comprising a binder is not particularly limited and may be selected as appropriate. From the viewpoint of facilitating peeling from the attachment surface of the first base material, it is preferable to use a solvent that has low compatibility with the attachment surface.

The solvent may be at least one selected from the group consisting of water, N-methyl-2-pyrrolidone (NMP), methyl ethyl ketone (MEK), etc.

A solution in which the above resin is dissolved in the above solvent may be used as the resin solution. A commercially available resin solution may be used. Examples of commercially available products that may be used include MH-03041 (trade name, manufactured by NOF Corp.) and JMR-10M (trade name, manufactured by Nippon Vinyl Acetate & Poval Corp.).

The concentration of the resin in the resin solution comprising the binder is not particularly limited, and may be within a range in which the resin can be filled between the particles to form an integrated body. The resin content in the resin solution is preferably 1 to 50% by mass, 2 to 20% by mass, or 2 to 10% by mass. By setting the resin content in the above range, it is easier to control the protrusions to a preferred shape.

The amount of resin applied to 100 parts by mass of the particles is preferably 0.1 to 10% by mass, or 5 to 10% by mass.

In the device shown in FIG. 3, N-methyl-2-pyrrolidone (NMP) is used as the solvent for the treatment liquid, which is a combination that has low "compatibility" with the silicone rubber of the particle-carrying layer. In the present disclosure, the treatment liquid can be coated without being repelled because it can be permeated into the gaps between the particles on the attachment surface by capillary action. Therefore, the surface of the particles may be made lyophilic to improve compatibility with the treatment liquid.

In general, it is extremely difficult to form a thin-layer film in which particles and a resin-comprising coating film are integrated in a state enabling peeling from the first base material. For example, in a combination where the resin-comprising treatment liquid and the attachment surface of the first base material are easily compatible, a thin-layer film can be formed, but the peelability from the attachment surface of the first base material may be degraded, i.e., the transferability of particles may degrade. Conversely, in a combination where the resin-comprising treatment liquid and the attachment surface of the first base material are not easily compatible, the transferability of particles can be ensured, but it is difficult to form a thin layer because the treatment liquid is repelled.

This is a fundamental phenomenon that generally occurs when a slurry liquid in which particle and a resin solution are mixed in advance is coated. In order to resolve this contradictory relationship, in the present disclosure, a process is used in which the particle is first temporarily fixed as solids to the attachment surface and then the resin solution is supplied.

The above method of the present disclosure is particularly suitable for forming a layer with a high particle density and a small film thickness. That is, in the general slurry coating film method mentioned above, in order to make a film with a high particle density, it is necessary to increase the particle concentration in the slurry liquid, which results in a high viscosity of the slurry liquid. The higher the viscosity, the more difficult it becomes to coat a thin layer, and the coating becomes even more difficult on an attachment surface that has low compatibility and high repellency.

Meanwhile, by temporarily fixing the particles to the attachment surface to form a particle layer and then applying a resin solution, it is possible to form a layer with a small film thickness while maintaining a high particle density. In addition, even if the particle layer is made large in area, it is possible to form a coating film with a uniform thickness overall. As a result, even after the first base material is peeled off, defects are unlikely to occur in the particle layer, and the transferability of the particles can be improved.

Any binder liquid can be used without restrictions. A resin material is preferable due to good solubility in a solvent and because the lower the viscosity of the solution, the easier it is to coat. For example, the resin solution can be prepared by dissolving the above-mentioned resin in the above-mentioned solvent.

As mentioned above, unlike a slurry liquid in which particle and binder liquid are premixed, particle-free coating can be performed. Therefore, coating can be performed with a low viscosity. In addition, since there is no requirement for stabilizing the particle dispersion, a wide variety of materials can be used according to the purpose. In the device shown in FIG. 3, a thermoplastic acrylic binder with high binder removal ability is used

After supplying the resin solution, the solvent in the resin solution is removed to obtain a battery base material. In the device shown in FIG. 3, a mechanism for heating the back side of the first base material 20 with a hot plate is provided as the solvent removal promotion means 14. In addition, the particle layer having a resin-comprising coating film can be peeled off from the battery base material to form a material layer. In other words, the material layer includes a particle layer and a resin-comprising coating film formed on the surface of the particle layer.

The thickness of the material layer is not particularly limited, but is preferably 1.0 to 100.0 μm, more preferably 2.0 to 50.0 μm, even more preferably 3.0 to 20.0 μm, and still more preferably 3.0 to 10.0 μm.

Next, the obtained material layer is peeled off from the attachment surface of the first base material and stacked in a plurality of layers to obtain a laminate of material layers. After peeling off the plurality of material layers, the desired number of layers may be stacked to obtain a laminate, or the peeling and stacking of material layers may be repeated to obtain a laminate. In the device shown in FIG. 3, peeling and stacking of material layers are repeated to obtain a laminate.

A means for peeling is not particularly limited, and well-known means may be adopted. For example, a peeling roller or the like may be adopted similarly to the mask 22.

In the present disclosure, the step of obtaining a laminate preferably includes a step of heating the battery base material to bring the transfer target (object to which transfer is to be performed) into contact with the particle layer having a resin-comprising coating film, and then cooling to peel off the material layer from the attachment surface of the first base material, thereby transferring the material layer to the transfer target. A laminate can be obtained by repeating the step of transferring the material layer to the transfer target. That is, the transfer target is the desired transfer material (for example, a current collector) when the material layer is transferred for the first time, and the transfer target in the second and subsequent transfer steps is the material layer transferred in the previous step.

The material layer, which is an integrated body of particles and binder, is brittle and difficult to peel off, but the above-mentioned heating and cooling process allows for better peeling, transfer, and lamination even with less binder.

The heating temperature of the material layer during transfer is not particularly limited as long as it can ensure adhesion between the material layer and the transfer target. For example, 150 to 300°C, preferably 180 to 250°C, can be mentioned.

The cooling temperature during peeling is also not particularly limited as long as the material layer can be peeled off from the attachment surface. For example, 25 to 150°C, preferably 25 to 80°C, can be mentioned.

The device 100 shown in FIG. 3 has a lamination device 15 for laminating material layers. The device shown in FIG. 3 allows mask patterns to be changed on demand. Therefore, material layers on which particle patterns are formed can be continuously laminated in sequence in the designed lamination order. In addition, the lamination device 15 has a rotation mechanism, and the lamination angle of the pattern can be changed for lamination. Depending on the shape and material of the pattern, the ease of making the pattern may change depending on the conveying direction, so the angle and position can also be changed here to obtain the corresponding data.

The resin can have surface adhesivity (plasticity) as a result of heating. In the device shown in FIG. 3, the heater 16 is arranged under the first base material 20, which is an intermediate transfer body, and the particle layer and the resin-comprising coating film on the first base material 20 can be heated by moving the heater at a predetermined temperature up and down (contact and removal). When the resin becomes plastic as a result of heating and can be laminated, the particle layer and the resin-comprising coating film are pressed into contact with the transfer target (for example, aluminum foil that becomes the current collector of a battery).

After the particle layer and the resin-comprising coating film are brought into contact with the transfer target, the material layer is peeled off from the attachment surface of the first base material 20 by cooling. Cooling makes it easier to reduce the adhesion of the resin. It is preferable to cool from the attachment surface side of the material layer.

In order to ensure the transfer, the device shown in FIG. 3 is provided with a mechanism in which the heater is lowered after pressure contact and air is blown by the cooling fan 17 to lower the temperature of the first base material 20. As the temperature is lowered, the adhesiveness of the thermoplastic resin in the material layer is reduced, and then the lamination device is raised to complete the transfer. This is repeated a predetermined number of times to complete a laminate of material layers. There is no particular limit to the number of laminated layers, and it can be any desired number.

In the device shown in FIG. 3, the lamination device 15 is repeatedly brought into contact, at predetermined intervals, with the material layer conveyed by the first base material 20, repeating the peeling and transfer of the material layer to obtain a laminate.

The lamination step is not limited to this process, and for example, the same pattern can be created multiple times for a certain number of sheets, and sequential lamination can be thereafter performed while selecting the patterns.

The configuration of the device is also not limited to the flat plate pressure joining type as in the device shown in FIG. 3, and a belt type, rotary type or roller type device may also be used.

Here, the surface of the transferred material layer, i.e., the surface that was in contact with the attachment surface 21 of the first base material 20, has a characteristic shape.

The first particle 24 and the second particle 25 are held in a state where they are slightly sunk into the particle-carrying layer 29 (FIGS. 8A and 8B). After the resin is applied, the portions of the first particle 24 and the second particle 25 that are sunk into the particle-carrying layer 29 are not covered by the resin (FIG. 8B). Therefore, on one surface of the material layer 50 after the first base material is peeled off, a part of the surface of the first particle 24 and the second particle 25 is exposed (FIG. 8C).

That is, at least some of the particles that were held sunk into the particle-carrying layer 29 of the first base material 20 are in a state where a part of the particle surface is exposed on the surface of the material layer 50. This characteristic is widely applicable, for example, when a three-dimensional wiring pattern is formed using metal particles, since contact points can be ensured.

The material layer is an integrated body of a plurality of particles and resin, and the resin is filled between the plurality of particles. The material layer is covered with a resin-comprising coating film over the entire surface or a portion thereof.

It is preferable that at least a portion of the surface of the plurality of particles is exposed on at least one surface of the material layer. At least a portion of the plurality of particles may be exposed on both surfaces of the material layer, or at least a portion of the plurality of particles may be exposed on one surface of the material layer. In other words, it is preferable that at least one surface of the material layer has a resin-comprising coating film and a surface formed by particles in which a portion of the surface is exposed from the coating film.

As described above, the material layer can be manufactured by peeling off a particle layer having a resin-comprising coating film from the battery base material. It is preferable that the plurality of particles include first particle and second particle. The first particle and the second particle are an active material and/or a solid electrolyte.

Method for Manufacturing Laminate

As described above, a material layer including a substantially single-layer particle pattern can be produced by the production device shown in FIG. 3. Then, the material layers can be laminated to produce a laminate.

FIG. 5A shows an example of a laminate in which five material layers are laminated. The laminate includes particle layers and resin-comprising coating films formed on the surface of the particle layers. By removing the resin-comprising coating films, which are the second base material, from the laminate 401, a laminate (three-dimensional object 402) in which particle layers are laminated can be obtained (FIG. 5B).

Meanwhile, FIG. 5C shows an example of a conventional laminate 501 in which particle arranged on a resin base material 51 are laminated by a conventional method. Since the conventional laminate 501 has a high content of resin base material, it will likely be a time- and labor-consuming procedure to remove the resin base material 51 from the laminate 501 to obtain a particle laminate 502 (FIG. 5D). For example, when removing the resin base material by heating, more heat may be required or the heating time may be long.

Compared to the conventional laminate 501, the laminate 401 according to the present disclosure has resin-comprising coating films, which are the second base material, formed on the surface of the particle layers, and the resin content in the laminate is low. Therefore, it is possible to remove the second base material with a small amount of energy and obtain a laminate of particle layers.

The number of layers of the laminate is not particularly limited and can be changed according to the purpose of the laminate.

As described above, the three-dimensional object 402 can be manufactured by removing the second base material from the laminate 401 and forming a three-dimensional object including particle layers. That is, the three-dimensional object 402 is a pattern laminate consisting of particles only. The method for removing the second base material is not particularly limited, and for example, the laminate can be subjected to a binder removal procedure at high temperature to remove the second base material and obtain the three-dimensional object 402.

Therefore, the manufacturing method for the laminate includes a step of stacking material layers. The manufacturing method for the three-dimensional object includes a step of stacking material layers to obtain a laminate, and preferably a step of heating the laminate to remove the second base material.

When the second base material is to be finally removed, a resin with high removability can be selected according to the removal method and used as the material of the second base material. The removal means can be selected according to the characteristics of the particles used.

For example, a method for dissolving and removing the resin using a solvent can be used. When using a solvent, the conditions should be selected so that the particle pattern is not destroyed by the flowability of the solvent. There is also a method for using a photodegradable photosensitive material as the resin, but in this case, the conditions should be selected as appropriate because with some particle materials the light may be blocked by the particles.

Where the particle material is resistant to high temperatures, the second base material can be removed by heating. This method is preferable because the second base material can be easily removed by selecting an appropriate resin material. For example, as described above, an acrylic resin may be used as the resin and high-temperature resin removal may be performed by heating.

The conditions for high-temperature resin removal are not particularly limited, but it is preferable to heat at a temperature equal to or higher than the thermal decomposition temperature of the resin, and it is preferable to heat at a temperature lower than the thermal decomposition temperature of each particle layer in the laminate. According to the battery base material and laminate of the present disclosure, high-temperature resin removal can be performed at a lower temperature and for a shorter time than when conventional laminates are subjected to high-temperature resin removal. As a result, the second base material can be easily removed in the manufacturing process.

The temperature to which the laminate is heated is preferably 200°C or more and 1000°C or less, more preferably 300°C or more and 600°C or less, particularly preferably 300°C or more and 500°C or less, and even more preferably 300°C or more and 400°C or less.

The heating time is preferably maintained for 10 min or more at the sintering temperature, more preferably for 20 min or more. The upper limit is not particularly limited and may be, for example, 3 h or less, 1 h or less, or 40 min or less. For example, it is preferable to maintain the sintering temperature for 10 min to 3 h, 20 min to 1 h, or 20 min to 40 min.

The thermal decomposition temperature is the temperature at which the weight of the material begins to decrease when the temperature is gradually increased in the atmosphere during heating in a sintering treatment device. Therefore, by heating the laminate at a temperature equal to or higher than the thermal decomposition temperature of the resin, the resin in the laminate can be decomposed to reduce its weight, and the second base material can be removed from the laminate.

Material Particles

Battery materials are expected to achieve high performance as a result of functionally arranging the materials in the electrode layers and efficiently arranging the paths of ions and electrons. Among battery materials, since all-solid-state batteries do not use electrolytic solutions, this disclosure makes it possible to improve the paths of ions and electrons by functionally arranging the positive and negative electrode materials and a solid electrolyte material according to optimized patterns.

The particle layer comprises particle of at least one of an active material and a solid electrolyte.

The material particles used in the battery base material of the present disclosure are described hereinbelow.

There are no particular limitations on the active material particle, and known ones can be used. For example, a composite oxide comprising lithium can be used.

Specific examples of the active material include Li-Co oxide-based active material particle such as $LiCoO_2$ (lithium cobalt oxide), active material particle such as $LiMO_2$ (M is an element selected from the group consisting of Ni, Mn, and Co), Li-PO$_4$ oxide-based active material particle, lithium vanadium compounds ($Li_3V_2(PO_4)_3$, $LiVOPO_4$), olivine-type phosphate compounds ($LiMPO_4$ (M is one or more elements selected from the group consisting of Co, Ni, Mn, Fe, Mg, V, Nb, Ti, Al, and Zr)), etc. Active material particle that does not comprise lithium may also be used. Specific examples of such active materials include metal oxides ($MnO_2$, $V_2O_5$, etc.) and fluorides ($FeF_3$, $VF_3$, etc.).

Among the above active material particles, it is preferable to include Li-Co oxide-based active material particle and Li-PO$_4$ oxide-based active material particle.

Also, negative electrode active material particle such as graphite, Si, and lithium titanate (LTO) can be used. In other words, the battery base material of the present disclosure can be used to manufacture the positive and negative electrodes of secondary batteries.

The solid electrolyte is not particularly limited, and any known solid electrolyte can be used.

For example, Li-B oxide-based solid electrolyte particle such as lithium borate, Li-Yb oxide-based solid electrolyte particle, Nasicon-type solid electrolyte particle ($LiAlTi(PO_4)_3$, $LiAlGe(PO_4)_3$, etc.), Li-P-O-based solid electrolyte particle ($Li_3PO_4$, LiPON (particle in which part of the O in $Li_3PO_4$ is replaced with N)), etc. can be mentioned.

Among the above solid electrolyte particles, it is preferable to include Li-B oxide-based solid electrolyte particle and Li-Yb oxide-based solid electrolyte particle.

The above-mentioned active materials or solid electrolytes can be used as the above-mentioned first particle and second particle. Both the first particle and the second particle may be active material or both may be solid electrolyte. The first particle and the second particle may each be used alone or in combination of multiple types. When multiple types are combined, multiple types of particles may be premixed in advance. The particle surfaces may be surface-treated or coated.

The particle layer may comprise other particles in addition to the active material and/or solid electrolyte. The other particles are not particularly limited, and desired resin particle, inorganic particle, etc. can be used. Examples of resin particles include (meth)acrylic resin particle, urethane resin particle, ester resin particle, etc. Metal particle such as copper particle may also be used.

Method for Manufacturing Electrodes

The battery base material of the present disclosure can be used to manufacture electrodes for all-solid-state batteries. As described above, a material layer comprising an active material and/or a solid electrolyte can be transferred to a transfer target using the battery base material of the present disclosure. In addition, an electrode for an all-solid-state battery can be obtained by obtaining a laminate by the above-mentioned method, removing the second base material from the laminate, and forming a three-dimensional object comprising particle. The above-mentioned steps can be used for the step of obtaining the laminate and the step of forming the three-dimensional object.

The electrode may be a positive electrode or a negative electrode. The number of layers in the laminate is not particularly limited and can be changed depending on the purpose of the electrode to be manufactured. For example, three or more layers can be used.

EXAMPLES

The present disclosure will be specifically described hereinbelow with reference to Examples and Comparative Examples, but the present disclosure is not limited thereto. Unless otherwise specified, the parts in the following formulation are based on mass.

Example 1

A positive electrode material layer for an all-solid-state battery was produced using the production device shown in FIG. 3.

A positive electrode active material: lithium cobalt oxide (Nippon Chemical Industry Co., Ltd.: volume-based median diameter (D50) 5 $\mu$m) was used as the first particle, and the solid electrolyte: lithium borate (Toshima Manufacturing Co., Ltd.: volume-based median diameter (D50) 5 $\mu$m) was used as the second particle.

The first base material was a belt in which silicone rubber (SE9186 manufactured by Dow Toray Co., Ltd.) was coated to a thickness of 80 $\mu$m as a particle-carrying layer having an attachment surface on a 0.1 mm thick Invar support. The attachment surface had a rubber hardness of 20° and a surface attachment force of 0.5 mN/20 mm. The particle-carrying layer had a square shape with 5 cm length and 5 cm width.

A polyester film (K917, 1.5 $\mu$m thick, Mitsubishi Chemical Corporation) was used as the mask layer, and the mask openings were made with a UV laser processing machine (Kokyo, Inc.: Fine UV laser marker). In the particle supply units 7 and 11, magnetic particle (Japan Imaging Society: Standard Carrier P02) was used as carrier, and the first and second particle were placed on the attachment surface to form a particle layer.

The mask openings were in a 10 $\mu$m stripe pattern with lines and spaces, that is, a stripe-shaped pattern with openings 10 $\mu$m wide.

An acrylic resin (Kyoeisha Chemical Co., Ltd.: Oricox KC-1700P) was dissolved in N-methyl-2-pyrrolidone (NMP) to prepare a resin solution with a resin content of 5% by mass in the solution.

A liquid discharge dispenser 13 (non-contact jet dispenser, SuperJet2, manufactured by Musashi Engineering Co., Ltd.) shown in FIG. 4 was used to apply the resin solution.

In order to prevent the droplets that landed on the surface of the particle layer from coalescing, divided application of the resin solution was performed following the conceptual diagram shown in FIG. 6.

The droplets of the resin solution form dots when they land on the surface of the particle layer. The operation of applying binder liquid droplets with an adjacent dot interval equal to or more than the diameter of the previously formed dots, and applying the next droplet to a position that did not overlap with the previous one was repeatedly performed.

In Example 1, the resin solution was applied to the particle layer so that the number of droplets applied per 1 cm$^2$ was 100. The amount of resin applied to 100 parts by mass of particle was 7% by mass.

Then, the solvent was removed using the device shown in FIG. 3, and a resin-comprising coating film was formed, thereby producing a battery base material comprising a positive electrode material layer for an all-solid-state battery. A hot plate was used as the solvent removal promotion means 14, and the base material was heated at 120°C for 30 min.

In the battery base material of Example 1, the particle layer was formed on the entire surface of the first base material, and the resin-comprising coating film was formed on the entire surface of the particle layer. In other words, the ratio of the area where the coating film was formed to the area of the first base material was 100% by area.

Shape Observation of Battery Base Material

A confocal laser microscope (VK-X3000) manufactured by Keyence Corporation was used to observe the shape of the battery base material. The shape of the battery base material was observed focusing on the undulating protrusions, undulating depressions, undulation height, and undulation width, with the base layer surface (the surface of the silicone rubber layer in the case of Example 1) to which no particles were applied as a reference (FIG. 7). The total number density of the protrusions and depressions in the region where the undulating structure was formed was also calculated. The measurement method was as described above.

Following the preparation of the battery base material including the positive electrode material layer, the positive electrode material layer was peeled off from the battery base material and laminated using the lamination device 15 in the device shown in FIG. 3. Specifically, three material layers were laminated on aluminum foil (20 $\mu$m thick) while shifting the lamination angle by 90 degrees (pressure joining temperature 190°C, peeling temperature 140°C) to obtain a laminate.

Evaluation of Transferability

The transferability of the material layer was evaluated in the manufacturing process of the laminate.

To evaluate the transferability, the images of the particle-carrying layer before and after peeling of the material layer were analyzed, and the transferability was evaluated using the following formula.

Transfer rate (%) = [(particle area before peeling) - (particle area after peeling)]/(particle area before peeling) $\times$ 100.

In the above formula, "particle area before peeling" refers to the area of the particle layer disposed on the surface of the particle-carrying layer of the battery base material. "Particle area after peeling" refers to the area of the region where particle remain on the surface of the particle-carrying layer after the material layer is peeled off from the battery base material.

Quantitative determination of the particle area before and after peeling of the material layer was performed using the following method. An image of the produced battery base material was taken from above, the parts of the image that correspond to the particle-carrying layer and the parts that correspond to the particles were quantified by black and white binarization processing, and the area of the particle layer arranged on the surface of the particle-carrying layer was calculated.

After that, an image of the particle-carrying layer after the material layer was peeled off from the battery base material was taken and quantified in the same way, and the area of the region where particle remain on the surface of the particle-carrying layer was calculated. Based on the calculated area, the transfer rate (%) was calculated using the above formula.

The image analysis software used was Adobe Photoshop (registered trademark). The transfer rate was calculated according to the following steps.

(1) An image of the battery base material was imported into a PC at a resolution of 600 dpi.
(2) An area of 10 mm length $\times$ 10 mm width was selected from the imported image.
(3) The image was processed into grayscale.
(4) The grayscale processed image was processed into two gradations of monochrome.
(5) The monochrome two gradation processed image was subjected to error diffusion processing.
(6) The error diffusion processed image was processed into grayscale.
(7) The number of pixels at level 0 (black) of the histogram (256 gradation) in the grayscale processed image was counted.

The proportion of the number of level 0 pixels corresponds to the area of the region where the particle is arranged. After the material layer is peeled off and the particle layer is completely transferred, the number of level 0 pixels on the surface of the particle-carrying layer is 0. That is, the transfer rate after all the particles arranged in the particle-carrying layer are completely transferred to the material layer is numerically represented as 100%.

The number of pixels may be affected depending on the tinge of the underlying first base material. In that case, the number of pixels of the first base material before the particles are applied is corrected as the background, or the particle area is calculated by image correction.

The transfer rate was evaluated using the average value of three samples.

That is, the transfer rate (%) was obtained by the above-mentioned method for each of the three material layers used in the manufacturing process of the laminate, and the average value was calculated.

The obtained average value was ranked and evaluated according to the following criteria.

[Table 1]

| Evaluation rank | Average value of transfer rate (%) |
|---|---|
| A | 99% or more |
| B | 90% or more and less than 99% |
| C | 80% or more and less than 90% |
| D | less than 80% |

The observation results of the shape of the battery base material in Example 1 and the evaluation rank of the transfer rate are shown in Table 2.

Example 2

As the active material particle, lithium cobalt oxide (Nippon Chemical Industry Co., Ltd.) was classified, and a single component with a median diameter (D50) of 30 $\mu$m was applied to the entire surface without a mask. The resin content in the resin solution was changed to 20% by mass, and droplets were applied to the particle layer once per 1 cm$^2$. A battery base material was produced with the other conditions being the same as in Example 1.

The observation results of the shape of the battery base material and the evaluation rank of the transfer rate are shown in Table 2.

Example 3

As the active material particle, lithium cobalt oxide (Nippon Chemical Industry Co., Ltd.) was classified, and a single component with a median diameter (D50) of 0.5 μm was applied to the entire surface without a mask. The number of droplet applications per 1 cm$^2$ was set to 40,000, and the divided application of a predetermined amount of binder liquid to the particle layer was performed. A battery base material was produced with the other conditions being the same as in Example 1.

The observation results of the shape of the battery base material and the evaluation rank of the transfer rate are shown in Table 2.

Example 4

As the active material particle, lithium cobalt oxide (Nippon Chemical Industry Co., Ltd.) was classified, and a single component with a median diameter (D50) of 0.5 μm was applied to the entire surface without a mask. The resin content in the resin solution was changed to 1% by mass, and the number of droplet applications per 1 cm$^2$ was set to 4,900, and the divided application of a predetermined amount of binder liquid to the particle layer was performed. A battery base material was produced with the other conditions being the same as in Example 1.

The observation results of the shape of the battery base material and the evaluation rank of the transfer rate are shown in Table 2.

Example 5

As the active material particle, lithium cobalt oxide (Nippon Chemical Industry Co., Ltd.) was classified, and a single component with a median diameter (D50) of 10 μm was applied to the entire surface without a mask. The resin content in the resin solution was changed to 10% by mass. A battery base material was produced with the other conditions being the same as in Example 1.

The observation results of the shape of the battery base material and the evaluation rank of the transfer rate are shown in Table 2.

Example 6

A 0.1 mm thick Invar support was used as the first base material without being coated with silicone rubber. The number of droplet applications per 1 cm$^2$ was set to 25, and the divided application of a predetermined amount of binder liquid to the particle layer was performed. A battery base material was produced with the other conditions being the same as in Example 1.

The observation results of the shape of the battery base material and the evaluation rank of the transfer rate are shown in Table 2. The coating film layer was formed in the desired shape and the transfer rate was excellent, but some disturbance occurred in part of the particle pattern due to the impact of the droplets from the dispenser.

Example 7

A battery base material was produced in the same manner as in Example 1, except that the number of droplet applications per 1 cm$^2$ was set to 10,000, and the divided application of a predetermined amount of binder liquid to the particle layer was performed.

The observation results of the shape of the battery base material and the evaluation rank of the transfer rate are shown in Table 2.

Example 8

As the active material particle, lithium cobalt oxide (Nippon Chemical Industry Co., Ltd.) was classified, and a single component with a median diameter (D50) of 7.5 μm was applied to the entire surface without a mask. The number of droplet applications per 1 cm$^2$ was set to 900, and the divided application of a predetermined amount of binder liquid to the particle layer was performed. A battery base material was produced with the other conditions being the same as in Example 1.

The observation results of the shape of the battery base material and the evaluation rank of the transfer rate are shown in Table 2.

Example 9

A battery base material was produced in the same manner as in Example 1, except that the number of droplet applications per 1 $cm^2$ was set to 25, and the divided application of a predetermined amount of binder liquid to the particle layer was performed.

The observation results of the shape of the battery base material and the evaluation rank of the transfer rate are shown in Table 2.

Example 10

A battery base material was produced in the same manner as in Example 1, except that the resin solution was applied manually using a micropipette.

The observation results of the shape of the battery base material and the evaluation rank of the transfer rate are shown in Table 2. The coating film layer was formed in the desired shape and the transfer rate was excellent, but the productivity was significantly reduced.

Example 11

A battery base material was produced in the same manner as in Example 1, except that the resin solution was changed to MH-03041 (NOF Corporation).

The observation results of the shape of the battery base material and the evaluation rank of the transfer rate are shown in Table 2.

Example 12

A battery base material was produced in the same manner as in Example 1, except that the resin solution was changed to JMR-10M (Japan Vinyl Acetate & Poval Corporation).

The observation results of the shape of the battery base material and the evaluation rank of the transfer rate are shown in Table 2.

Comparative Example 1

A battery base material was produced in the same manner as in Example 1, except that the resin solution was applied in 22 separate applications to an area of 25 $cm^2$.

The observation results of the shape of the battery base material and the evaluation rank of the transfer rate are shown in Table 3.

Comparative Example 2

A battery base material was produced in the same manner as in Example 1, except that the number of droplet applications per 1 $cm^2$ was set to 44,100, and the divided application of a predetermined amount of binder liquid to the particle layer was performed.

The observation results of the shape of the battery base material and the evaluation rank of the transfer rate are shown in Table 3. A decrease in the landing accuracy of the droplets discharged from the dispenser was observed due to the large number of times the binder was applied per 1 $cm^2$.

Comparative Example 3

A battery base material was produced in the same manner as in Example 1, except that the resin solution was manually applied in 4 separate applications to an area of 5 $cm^2$ by using a micropipette.

The observation results of the shape of the battery base material and the evaluation rank of the transfer rate are shown in Table 3.

[Table 2]

| | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Number density of protrusion (number per 1cm²) | 100.0 | 1.0 | 40000.0 | 4900.0 | 100.0 | 25.0 | 10000.0 | 900.0 | 25.0 | 100.0 | 100.0 | 100.0 |
| Average height of protrusion (μm) | 15.0 | 80.0 | 1.0 | 1.0 | 30.0 | 15.0 | 15.0 | 15.0 | 15.0 | 15.0 | 15.0 | 15.0 |
| Undulation width / undulation height | 100.0 | 187.5 | 75.0 | 214.3 | 50.0 | 200.0 | 10.0 | 33.3 | 200.0 | 100.0 | 100.0 | 100.0 |
| Average height of protrusions /average particle diameter | 3.0 | 2.7 | 2.0 | 2.0 | 3.0 | 3.0 | 3.0 | 2.0 | 3.0 | 3.0 | 3.0 | 3.0 |
| Evaluation — Transfer rate (%) | 100 | 97 | 96 | 93 | 98 | 100 | 99 | 98 | 97 | 100 | 100 | 100 |
| Evaluation — Evaluation rank | A | B | B | B | B | A | A | B | B | A | A | A |

In the table, the average particle diameter refers to the median diameter based on the volume of all particles comprised in the particle layer.

No depressions were observed in Examples 1 to 12 and Comparative Examples 1 to 3.

[Table 3]

| | | Comparative example 1 | Comparative example 2 | Comparative example 3 |
|---|---|---|---|---|
| Number density of protrusion (number per 1cm$^2$) | | 0.9 | 44100.0 | 0.2 |
| Average height of protrusion ($\mu$m) | | 15.0 | 1.0 | 15.0 |
| Undulation width / undulation height | | 1066.0 | 71.4 | 2500.0 |
| Average height of protrusions /average particle diameter | | 3.0 | 2.0 | 3.0 |
| Evaluation | Transfer rate (%) | 60 | 87 | 40 |
| | Evaluation rank | D | C | D |

Various embodiments have been described in detail above but it will be understood that the present disclosure is not limited to these embodiments and encompasses all modifications, variants, alternatives and equivalents falling within the scope of the appended claims.

**Claims**

1. A battery base material for use in a secondary battery,
   the battery base material comprising:

   a first base material (20), and
   a particle layer (40) arranged on one surface of the first base material (20), comprising particle of at least one of an active material and a solid electrolyte, wherein
   the particle layer (40) has a resin-comprising coating film, which is a second base material,
   the coating film forms an undulating structure having at least either protrusion or depression on a surface of the particle layer (40); and
   in a region where the undulating structure is formed, a total number density of the protrusion and the depression measured using a confocal laser microscope is 1/cm$^2$ or more and 40,000/cm$^2$ or less.

2. The battery base material according to claim 1, wherein an average height of the protrusion from a surface of the first base material is 1 $\mu$m or more and 100 $\mu$m or less.

3. The battery base material according to claim 1 or 2, wherein

   the first base material has a particle-carrying layer, and
   the particle-carrying layer has a resin portion and an attachment portion, and the particle is arranged at the attachment portion.

4. The battery base material according to any one of claims 1 to 3, wherein an average value of a ratio of an undulation width to an undulation height of the undulating structure is 10.0 or more and 250.0 or less.

5. The battery base material according to any one of claims 1 to 4, wherein a height of the protrusion is 2.0 times or more and 6.0 times or less of a volume-based median diameter of the particle.

6. The battery base material according to any one of claims 1 to 5, wherein a ratio of an area of a region where the coating film is formed to an area of the first base material is 70% by area or more.

7. A method for manufacturing a battery base material for use in a secondary battery,

   the battery base material comprising:

a first base material (20), and

a particle layer (40) arranged on one surface of the first base material (20), comprising particle of at least one of an active material and a solid electrolyte,

the particle layer (40) has a resin-comprising coating film, which is a second base material,

the coating film forms an undulating structure having at least either protrusion or depression on a surface of the particle layer (40); and

in a region where the undulating structure is formed, a total number density of the protrusion and the depression measured using a confocal laser microscope is $1/cm^2$ or more and $40,000/cm^2$ or less,

the manufacturing method comprising:

a particle layer formation step of arranging material particle on the first base material (20) to form the particle layer; and

a coating film formation step of forming the coating film, which is the second base material, on a surface of the particle layer (40), wherein

the coating film formation step includes:

a step of applying droplets of a resin solution comprising the resin and a solvent to the surface of the particle layer (40); and

a step of removing the solvent to form the coating film.

8. The method for manufacturing a battery base material according to claim 7, wherein the step of applying droplets includes:

(i) a step of dividing the surface of the particle layer into a plurality of blocks;

(ii) a step of applying the droplets to a portion of an area of the block;

(iii) a step of allowing the applied droplets to stand and thicken or dry; and

(iv) a step of further applying droplets to position where the droplets were not applied in the step (ii) or position overlapping with the droplets thickened or dried in the step (iii),

by repeating the steps (ii) to (iv), the droplets are applied to the entire area of the block.

9. The method for manufacturing a battery base material according to claim 7 or 8, wherein the droplets are applied using a dispenser.

START

PARTICLE LAYER IS FORMED ON ONE SURFACE OF FIRST BASE MATERIAL

SOLUTION COMPRISING RESIN IS APPLIED TO PARTICLE LAYER

SOLVENT IS REMOVED AND COATING FILM COMPRISING RESIN IS FORMED ON SURFACE OF PARTICLE LAYER

END

FIG.1

FIG.2A

FIG.2B

FIG.2C

FIG.2D

FIG.2E

FIG.2F

FIG.2G

FIG.2H

FIG.2I

FIG.3

FIG.4

50 {

401

FIG.5A

402

FIG.5B

51

501

FIG.5C

502

FIG.5D

FIG.6A

FIG.6B

FIG.6C

FIG.6D

61  66  62  64  63

65

29

1

FIG.7

24

29

1

FIG.8A

27

25

FIG.8B

50

FIG.8C

Europäisches
Patentamt
European
Patent Office
Office européen
des brevets

## EUROPEAN SEARCH REPORT

**Application Number**

EP 25 19 2074

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 198301 A (CANON KK) 10 December 2020 (2020-12-10) * paragraph [0001] - paragraph [0003] * * paragraph [0012] * * paragraph [0014] * * paragraph [0018] * * paragraph [0020] * * paragraph [0024] - paragraph [0030] * * paragraph [0034] - paragraph [0035] * * paragraph [0038] * * paragraph [0040] * * paragraph [0065] * * paragraph [0070] - paragraph [0073] * * paragraph [0075] * * paragraph [0077] - paragraph [0079] * * paragraph [0082] * * paragraph [0086] * * paragraph [0091] - paragraph [0092] * * paragraph [0137] - paragraph [0142] * * paragraph [0146] * * paragraph [0155] * * paragraph [0184] * * example 1 * * figures 1,2,5, 8, 9A, 9B * ----- | 1-9 | INV. H01M4/13 H01M4/62 |
| A | JP 2024 078507 A (CANON KK) 11 June 2024 (2024-06-11) * paragraph [0026] * * paragraph [0038] - paragraph [0039] * * paragraph [0051] * ----- | 1-9 | |
| A | US 2022/131124 A1 (MATSUNAGA MASAFUMI [JP]) 28 April 2022 (2022-04-28) * figures 2,3 * ----- | 1-9 | |

**TECHNICAL FIELDS SEARCHED (IPC)**

H01M

The present search report has been drawn up for all claims

| Place of search | Date of completion of the search | Examiner |
|---|---|---|
| Munich | 9 January 2026 | Kuhn, Tanja |

EPO FORM 1503 03.82 (P04C01)

## ANNEX TO THE EUROPEAN SEARCH REPORT
## ON EUROPEAN PATENT APPLICATION NO.

EP 25 19 2074

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2026

| Patent document cited in search report | | Publication date | Patent family member(s) | | Publication date |
|---|---|---|---|---|---|
| JP 2020198301 A | | 10-12-2020 | JP | 7690262 B2 | 10-06-2025 |
| | | | JP | 2020198301 A | 10-12-2020 |
| JP 2024078507 A | | 11-06-2024 | JP | 2024078507 A | 11-06-2024 |
| | | | US | 2025289025 A1 | 18-09-2025 |
| | | | WO | 2024117041 A1 | 06-06-2024 |
| US 2022131124 A1 | | 28-04-2022 | CN | 113438986 A | 24-09-2021 |
| | | | JP | 2020129495 A | 27-08-2020 |
| | | | JP | 2024015141 A | 01-02-2024 |
| | | | US | 2022131124 A1 | 28-04-2022 |
| | | | WO | 2020162284 A1 | 13-08-2020 |

EPO FORM P0459

For more details about this annex : see Official Journal of the European Patent Office, No. 12/82

**EP 4 697 398 A1**

**Patent documents cited in the description**

- JP 2019137060 A